# EUROPEAN PATENT SPECIFICATION

(11) **EP 0 781 193 B1**
(45) Date of publication and mention of the grant of the patent: **20.02.2002**
(21) Application number: 95931973.2
(22) Date of filing: 01.09.1995
(51) Int. Cl.: B29C 51/44

(54) **THERMOFORMING APPARATUS FOR THERMOFORMABLE MATERIALS IN RIBBON OR SHEET-FORM**
WARMFORMVORRICHTUNG ZUM WARMFORMEN VON BANDFÖRMIGEN ODER FOLIENFÖRMIGEN MATERIALIEN
DISPOSITIF DE THERMOFORMAGE DESTINE A DES MATERIAUX THERMOFORMABLES SOUS FORME DE RUBAN OU DE FEUILLE

(30) Priority: 14.09.1994 IT VR940082
(43) Date of publication of application: 02.07.1997
(73) Proprietor: ISAP OMV GROUP SPA, 37025 Verona (IT)
(72) Inventor: PADOVANI, Pietro, I-37100 Verona (IT)
(74) Representative: Ede, Eric
(86) International application number: EP9503451
(87) International publication number: WO9608357

(56) References cited:
- EP-A- 0 220 967
- WO-A-94/15863
- DE-A- 3 928 301
- FR-A- 2 416 856
- GB-A- 2 149 717
- GB-A- 2 263 660
- US-A- 2 992 454
- US-A- 4 684 012
- US-A- 4 807 421

## Description

This invention generally relates to a thermoforming apparatus for thermoformable materials in ribbon or sheet-form.

As is known in the art - see for example the patents of Applicant no. 1 175 178 and no. 1 218 634 - it has already been suggested to extract mouldings of thermoformed objects from a female die using suction plates which are introduced between the male die and the female die of a thermoforming machine and then successively move away from the moulding area to deposit the articles onto an extracting or removal means for a series of intervening operations on the articles, such as stacking, labelling, etc.

Also already proposed has been a thermoforming machine with a double female die arranged to be actuated in alternate transverse motion in relation to a male die, in which two suction hoods alternately extract a thermoformed article moulding from a respective female die, to transfer it in sequence to a perforated jig forming part of a step conveyor having a plurality of jigs, each of which has holes dimensioned and arranged like the female cavities of the female dies where the articles were thermoformed. The conveyor is operatively connected to the thermoforming machine and moves at the pace of the operating rate of the thermoforming machine, and is intended to receive the articles immediately after the thermoforming process, to support them in the same reciprocal set as they occupied in female die, in order to prolong the time for the stabilisation of the materials just thermoformed and allow the regular feeding of the thermoformed articles to a series of operating stations for intervention on the articles.

Reference should be made to applicant's Italian patent application no. VR 92A000012 filed 3 February 1992 and entitled "Process and apparatus for the thermoforming and stacking of hollow bottom-provided articles obtained from a ribbon of thermoplastic material".

International publication number WO 94/15863 to the present applicant describes a thermoforming apparatus comprising extraction pick-up means designed to withdraw a thermoformed article from the female die and to transfer them to a receiving station or a work station. Once at the receiving station, the article is released from the pick-up means and can fall into the receiving station. The pick-up means comprise a plate-like member which has seats for the thermoformed articles and retention means for retaining them within each seat. The retention means comprises engaging/disengaging means for elastically engaging the interior of the article to enable the article to be removed from the mould and transferred.

US patent 4 464 329 (Whiteside et al) discloses a thermoforming machine in which the plates of a plate-conveyor pass between a male die and a female die and are pressed between the two dies during the closure phase of the die and co-operate with an intermediate auxiliary die, which is mobile in relation to the female die. Each plate or jig is fitted with receiving seat for a moulded article and around the peripheral contour of such seat is provided a ring gasket of flexible material which serves to resiliently engage and keep the thermoformed article restrained in its position whether during the extraction of the article from the female die or during its transfer to an unloading station or removal from the conveyor.

The solutions proposed up to now, although satisfactory from many points of view, have not provided for the thermoformed article or articles to be held fast to a receiving template or jig forming part of the step conveyor operatively connected to the thermoforming machine, in which case, the thermoformed and not yet stabilised articles can undergo inertial shifting or removal from their reception seats, whereby they can lose the required precision of their positioning for successive operations or interventions on them.

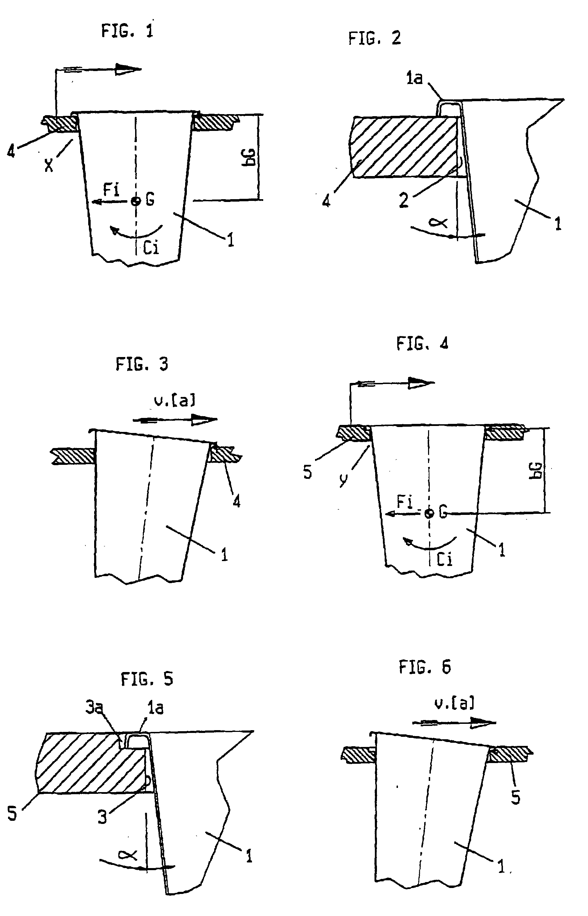

It can be seen, in fact, in Figures 1 to 6 in the accompanying drawings show a truncated conical container with protruding rim such as a beaker 1, deposited in two different seats (through-holes) 2 and 3 (which latter is fitted with a peripheral recess 3a against which the rim 1a of the container can abut provided in a respective transfer plate or jig 4 and 5. As each plate or jig is speedily moved at the pace of the rate of operation of the thermoforming machine which produces the articles, the articles in the jig are repeatedly subjected to acceleration both while being moved forwards and stopped. Since the centre of gravity G of each article 1 is outside the plane of the lying position of the jigs 4 and 5, whenever the article undergoes an acceleration, it also undergoes an upturning momentum which tends to make the article tilt in relation to the vertical in proportion to the arm bG (Figs. 1 and 4). In view of the taper (angle α - Fig. 2 and 5), such momentum can also give rise to a harmful banging either on the lateral wall of the container 1 in the process of stabilisation, or on its rim (Figs. 3 and 6) as also to undesirable bedding outside the axis, which almost always compromise the good result of successive operations and interventions on the container which must maintain a correct, unvarying set, either during the step-by-step transfer or while stationed at various work stations.

In the case of the solution suggested in US patent 4 464 329, the extraction operations of the die are not kept separate from the positioning operation of the transfer plate or jig, the reason why recourse must be made to a three-piece die (male, female and auxiliary intermediate die) extremely complicated and costly to make and mobilise. Moreover, in the Whiteside et al. solution, during the moulding phase, the ring gasket is kept in contact with the hot edges of the thermoforming die, and thus the gasket is subjected to repeated thermal cycling, undergoes rapid ageing and loss of flexibility, and after a limited number of thermoforming cycles, can stiffen until it causes scoring or another form of damage to an article which has just come out of the thermoforming die and is not yet fully stabilised, and thus undoubtedly increasing the number of rejects (unless special and consequently very expensive material is used).

The main object of the present invention is to eliminate or drastically reduce the drawbacks often complained of in the thermoforming apparatus, thereby allowing a rapid extraction of the thermoformed articles from the die and seating them in a stable set on templates or jig for successive removal and transfer to one or more treatment and/or work stations. Another object of the present invention is to provide available a thermoforming apparatus fitted with a step conveyor with templates or jigs for receiving the articles just extracted from the thermoforming dies and in the process of stabilisation, to enable them to be transferred to a plurality of work stations, while keeping their set intact.

These and further objects, will become more apparent later, are achieved with a thermoforming machine fitted with at least one female die and counter-die or male die reciprocally approachable and removable for the operations of closing, thermoforming and opening, a feeder appropriate for feeding thermoforming material in ribbon or plate from between each female die and counter-die, cutting means associated with the die and counter-die for cutting the ribbon or plate material, immediately after the closure of the die and counter-die, at least one work or treatment station for articles thermoformed in the or each die or counter-die, extraction pick-up means designed to withdraw a thermoformed article from the female die and transfer it to a receiving conveying template which has the same seating configuration as that of the female die and is arranged to move the thermoformed articles past at least one work or treatment station, characterised in that retention means are provided in said receiving conveying template to constrain articles in position against undesired movement therein, wherein said retention means are adapted to engage an article such that the article is constrained in a desired position.

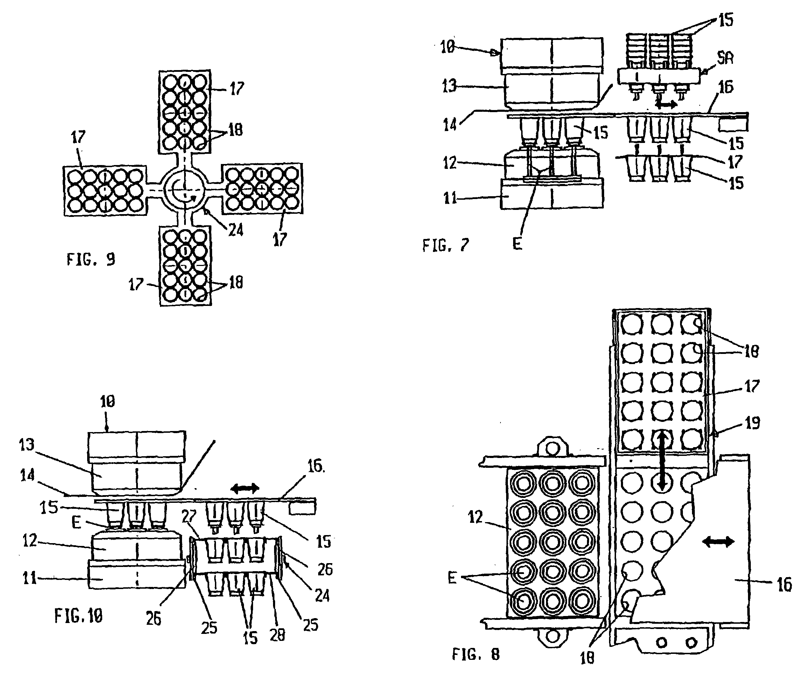

Further aspects and advantages of the present invention will become more apparent from the following detailed description of some of the currently preferred embodiments thereof, give by way of indicative, although not exclusive examples only, with reference to Figures 7 to 46 of the accompanying drawings, in which:
Figure 7 is a schematic lateral elevation of a thermoforming machine provided with an extraction plate for the thermoformed articles and with an alternatingly moving conveyor having two coplanar templates.
Figure 8 is a partial top view of the female die of the thermoforming machine, the conveyor and the extraction plate of Fig. 7;
Figure 9 is a top view illustrating a carousel variant with four arms;
Figure 10 shows in schematic section and lateral elevation view a thermoforming machine fitted with extraction plate for thermoformed articles and with a chain conveyor '(with despatch and return runs, parallel but moving in opposite direction) fitted with article receiving templates, moving in sequence, first in one direction (forward run) and then in the other (return run);
Figure 11 illustrates a partial top view of the female die of the thermoforming machine, the conveyor and the extraction plate of Fig. 10;
Figures 12 and 13 are, respectively, a lateral elevation view and a top section similar to those of Figures 10 and 11, but with a conveyor with templates mounted and trailed along two circular, coaxial and coplanar trackways;
Figure 14 is a partial sectional view of a conveyor template with seat provided with retention collar and container seated therein;
Figure 15 illustrates a detail of the template of Fig 14 to an enlarged scale;
Figure 16 illustrates a partial sectional view of another conveyor template similar to that in Fig. 14, but also formed with an annular recess for receiving the rim of the container;
Figure 17 illustrates a detail in section and to an enlarged scale of Fig 16;
Figures 18 and 19 are top views illustrating possible shapes in circular, rectangular or quadrate topview of the container of Figures 14 and 16;
Figure 20 is a local sectional view which shows another embodiment of a template seat for thermoformed articles;
Figure 21 shows a sectional detail of Fig. 20;
Figure 22 shows a sectional view of a further embodiment of a seat for a receiving template for thermoformed articles;
Figure 23 illustrates a detail of Fig. 22;
Figure 24 is a sectional view showing a template with a receiving seat provided with an adapter collar for retaining the container;
Figure 25 shows a detail of Fig. 24;
Figure 26 and 28 and the respective details of Figures 27 and 29, illustrate two embodiments of a conveyor template fitted with resilient means of restraint for thermoformed articles;
Figure 30 illustrates a partial sectional view of a receiving seat for a thermoformed article in a conveyor template with vacuum retention means;
Figure 31 shows a variant of Fig. 30;
Figure 32 is a sectional view showing a receiving seat of thermoformed articles fitted with resilient retention means;
Figure 33 shows a modification of Fig. 32;
Figures 34 and 35 are topviews illustrating a circular and a rectangular shape of thermoformed article of Figures 32 and 33;
Figure 36 shows a partial sectional view of another embodiment of a receiving seat for thermoformed articles of a conveyor template provided with mechanical retention means;
Figures 37 and 38 show details and variants of the plate or template of Fig. 36;
Figures 39 and 40 are topviews illustrating a circular and a rectangular shape of thermoformed article installable in the plates of Figures 36 to 38;
Figures 41 and 42 show two partial sectional views of two different embodiments of a receiving seat for a thermoformed cover in a conveyor template;
Figure 43 shows a receiving seat of a conveyor template comprising a raised push rod;
Figure 44 shows a partial sectional view of a receiving seat with bearing recess for the rim of a thermoformed article;
Figure 45 illustrates a partial sectional view of a receiving seat in a conveyor template for thermoformed articles; and
Figure 46 shows a variant of Fig. 45.

In the accompanying drawings, the same or similar parts or components have been marked with the same reference numerals.

With reference first to the embodiment illustrated in Figures 7 and 8, schematically indicated by 10 is a thermoforming apparatus which comprises a base 11 on which is mounted a vertically mobile female die 12. Above the female die 12 there is provided, as is usual in thermoforming technology, a male die or counter-die 13, which in its turn, can be lowered and raised in relation to the female die and synchronously with it, to allow implementation of the required operations of closing and opening of the die, as well as cutting of the thermoformable material in ribbon or plate 14 being supplied by any suitable means between the dies 12 and 13 when they are in the open position.

The articles 15 (usually containers - beakers, cups, basins, lids and the like) obtained by thermoforming within the female die 12, after the opening or reciprocal removal of the dies 12 and 13, must be withdrawn from the female die, which operation being facilitated by the provision of the extraction members E (one for each thermoformed article) rising from the base of the female die during the opening phase of the dies. The articles are detached from the die 12 using an extraction plate 16, for example, a suction plate as described in Italian patent no 1 175 178 and no 1 218 634 referred to above, which is actuated in phase with the removal rate of the dies 12 and 13 and extracts all the moulding articles present in the female die 12 and transfers them onto a jig or template 17 fitted with so many reception seats of holes 18, equivalent in number to the articles 15 constituting a moulding.

The templates 17 belong to a conveyor 19 with two templates alternately movable, once onto one side of the die 12 and once onto the other, so that a template is moved laterally in relation to the female die, while the other is in front of it ready to receive an article moulding from the extraction plate 16. In their lateral position, the templates 17 deliver the articles 15 to a handling and/or treatment station, for example, a sterilisation and stacking station for the articles.

The embodiment of Figure 9 relates to a carousel conveyor 20 comprising of four templates 17 positioned at 90° angles, to revolve in a pre-set direction of rotation for sequential positioning under extraction plate 16, to receive from it a moulding of articles 15 to be transferred.

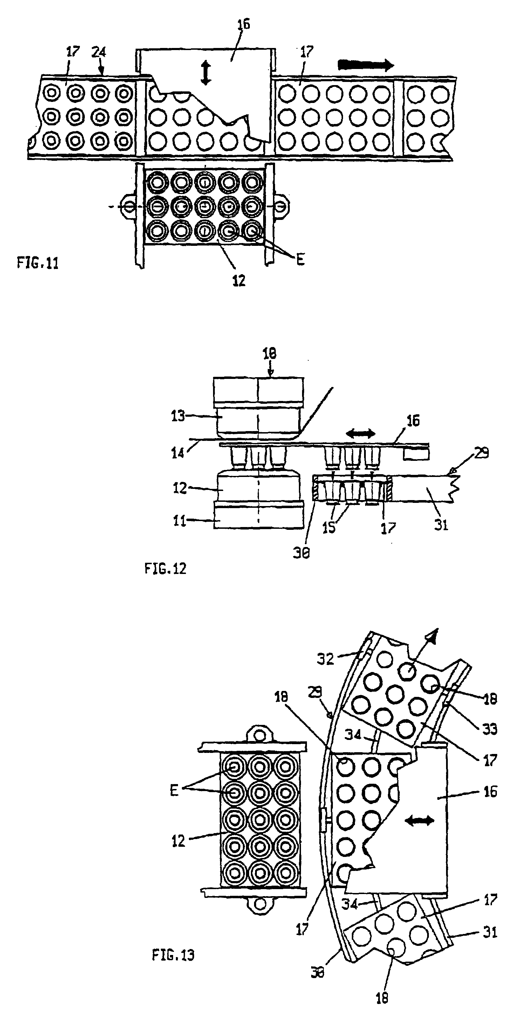

Figures 10 and 11 illustrate an embodiment in which the templates 17 are positioned under a step conveyor 24 comprising two chains 25 which turn around respective chain wheels 26 at the ends of the conveyor and spanning which are mounted a plurality of templates 17 which are then arranged in an upper run 27 immediately below the operating path of the extraction plate 16 and a lower one 28, which moves in the opposite direction to the upper one. There can be provided a multiplicity of work and/or handling stations for the articles 15 arranged on the templates alongside the conveyor 25 both along its upper run 27 and its lower run as well as at end wheels 26.

The variant shown in Figures 12 and 13 concerns a conveyor 29 comprising a single run, level but circular in shape, suitable for moving a plurality of templates 17 in sequence making them revolve stepwise, all in the same direction, under the extraction plate 16.

If desired, each template 17 can be easily mounted on a pair of fixed, circular, lateral trackways 30 and 31, for example, by means of two slides or carriages, respectively 32 and 33, and is restrained, typically by cable or chain or a suitable linkage means 34, either to the template preceding it or to the one following it on the circular conveyor 29. The template train is of course drawn in rotation by a step motor at a pace which will make the various templates stand in turn under the extraction plate 16.

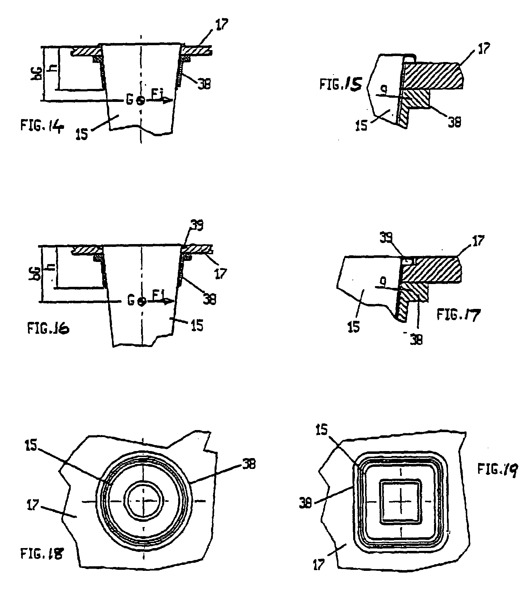

Figures 14 to 19 illustrate a template 17, which, at each receiving hole 18 has in its far surface far from the extraction plate 16 a tapered collar 38, in which the articles 15 can precisely fall into seated position where they can thus abut with their rim either directly against the other surface of the template (Figs 14 and 15) or with a suitable annular recess 39, which assists in providing greater stability and accuracy in holding the articles 15 of both circular and square or rectangular topview configuration in the correct set.

As can be seen, in fact, the upturning momentum due to the arm bG and the inertial force at the centre of gravity G of the articles 15 is completely neutralized by shape engagement provided by the collar 38 and the thickness of the template having a total height h. In its turn, the height h is determined as a function of both the shape of the article 15 and the clearance g between the wall of the article and the internal diameter of the respective receiving seat 16a.

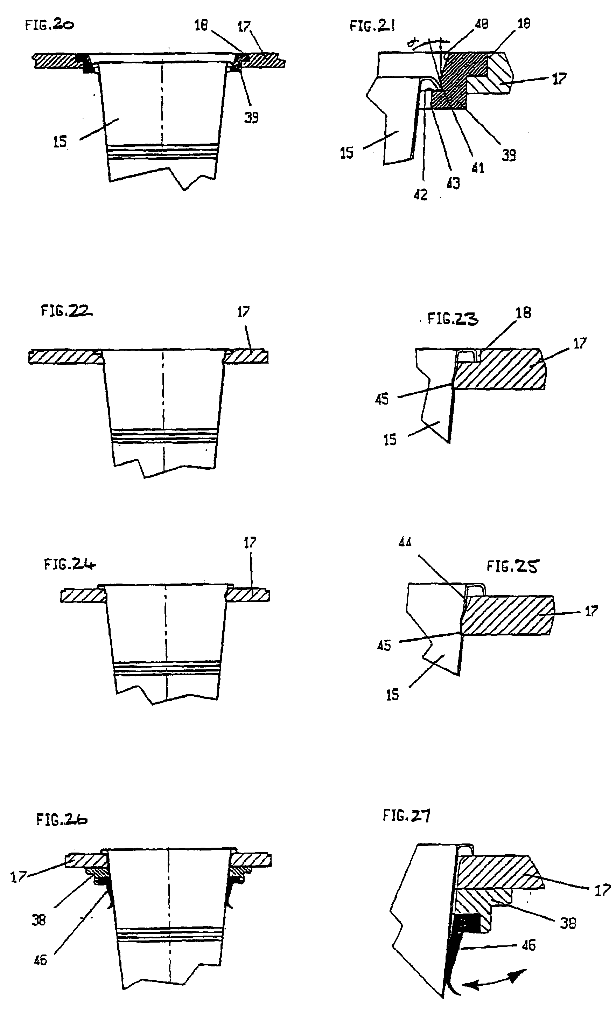

The embodiment shown in figures 20 and 21 concerns an adaptor collar 39 installable in each two-diameter receiving hole 18 a template 17 and having an internal diameter delimited by a higher tapered section 40, by an undercut intermediate section 41 with a negative angle α, for example, from 3° to 10°, preferably, of approximately 5°, by an annular shouldering 42 at the undercut section, followed by a cylindrical end section 41. The articles 15 released by an extraction plate 16 are placed between a respective collar 39 and at their rim, slide along the tapered section 40 until they snap engage with the tapered section 40, in which they remain "resiliently constrained" in the correct position.

The templates 17 of Figures 22 to 25 have holes 18 fitted with a receiving tapered upper portion 44 and connected lower portion 45, but with an internal diameter slightly smaller than the external dimensions of the article 15 in the proximity of its rim. Also, in this case, the article 15 is "resiliently constrained" and therefore settled in stable fashion within the respective receiving hole, from which it can be upturned solely by the exercise of a sufficient thrust from below upwards.

Since there is no clearance g between the internal diameter of the receiving seat 18 in the template 17 and walls of the article 15, it is not necessary to provide any collar means to increase the thickness of the template 17.

The embodiment of Figures 26 to 29 is similar to those of Figures 14 to 17, except that the lower part 46 of the collar 38 consists of a deformable resilient material, suitably anchored to the collar and designed to exert a moderate pressure on the external surface of the article.

Figures 30 and 31 show holes for a vacuum pneumatic circuit (not shown and communicating with a suitable suction means) formed in the collar 38 and having the function of maintaining the thermoformed articles 15 in a stable set.

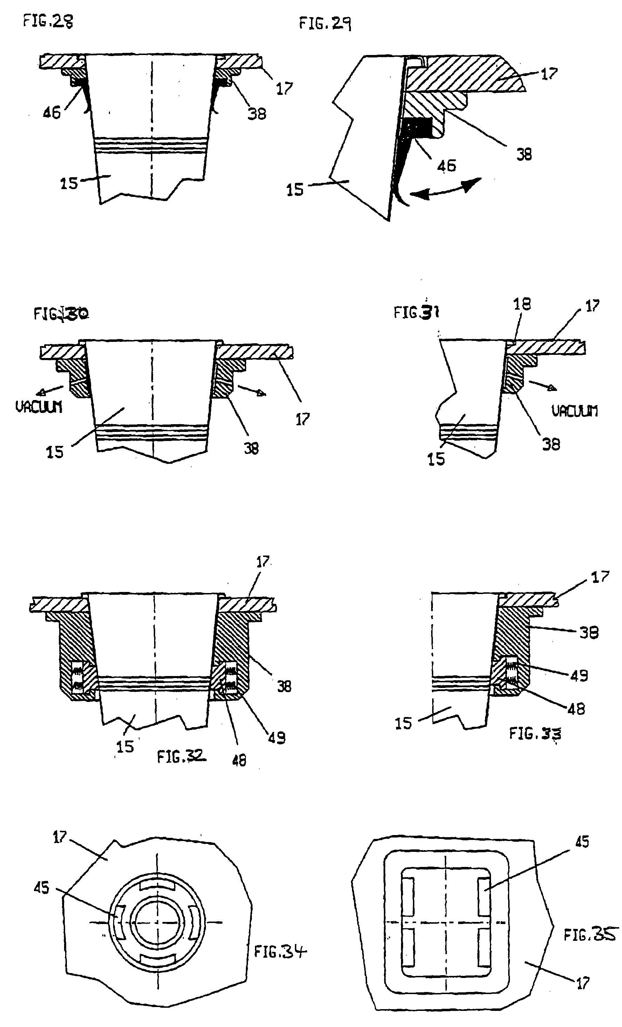

Figures 32 and 33 illustrate suitably shaped ratchets 48 installed in a collar 38 fitted at a preset distance from the template 17, in order to be able to move radially or otherwise along a transverse plane (preferably perpendicular) with respect to the axis of the respective article 15 to be locked in position. The ratchets 48 are resiliently loaded, for example, by one or more springs 49.

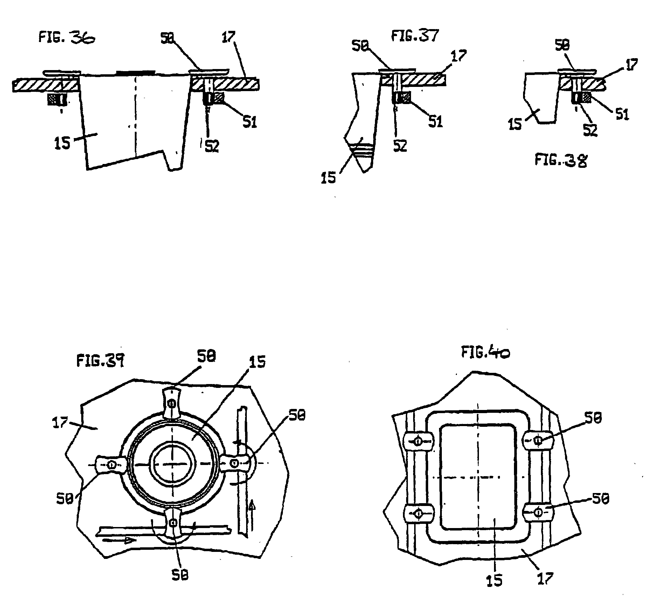

Figures 34 to 40 show eccentric mechanical retainers 50, each of which is mounted at a respective receiving hole 18 on a template 17, and is movable, for example, by rotation around an axis normal to the template 17 to which it belongs, between an operating position in which it engages the rim of an article 15 and an inoperative release position. Actuation of the retainers 50 can be effected by means of a rack operated by a suitable motion source, such as a pneumatic jack, and an integral pinion 52 in rotation with a respective retainer 50.

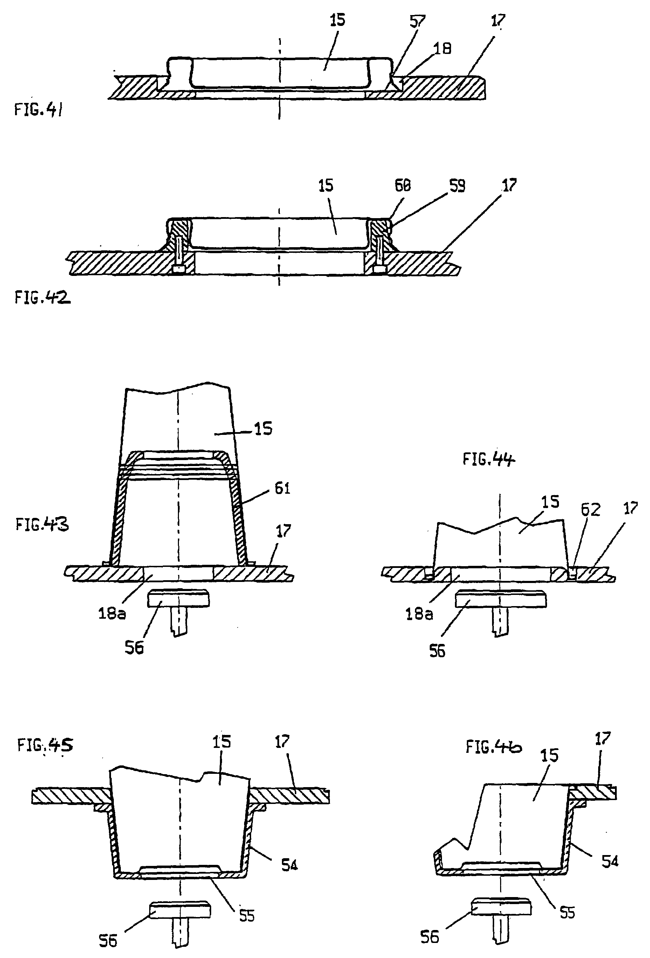

Means of retention in position for covers 15 are illustrated in Figures 41 and 42 and comprise a bearing shouldering 57 in each receiving seat 18, which has two diameters, or else an annular protrusion 59 which engages the internal diameter of the flange 60 of the cover (Fig. 42).

Figures 43 and 44 show retention means for articles 15 kept inverted during transfer to the various work or treatment stations. Figure 43 illustrates a sort of push rod 61 which rises from a surface of the templates 17 at a dummy receiving seat 18a, while in Figure 44 the dummy receiving holes 18 annular slots 62 are provided, with which the free rim of an inverted article 15 will abut. The removal is effected, for example, by means of a push rod 56.

Figures 45 and 46 illustrate cup retention means 54 with an orifice 55 at the base. The cup 54 is applied in similar way to a collar 38, to correspond with each receiving hole 18 of a template 17 for receiving and completely compassing an article 15 (even if not provided with a flanged or curled rim), thus preventing any lateral shift, but with the possibility of easily expelling it from the cup 54 by acting with a push rod 56 through the orifice 55.

As will be seen with the technical solution, in accordance with the present invention a sure, steady, uniform positioning of the articles for an indefinite series of mouldings is ensured, so that on the same articles while they are in the process of stabilization, a certain number of finishing and/or embellishment operations with great precision and without turning out rejects.

The invention described above is susceptible to numerous modifications and variations within the protective scope of defined by the purview of the claims.

## Claims

1. A thermoforming apparatus comprising
- a thermoforming machine (10) fitted with at least one female die (12) and counter-die or male die (13) reciprocally approachable and removable for the operations of closing, thermoforming and opening, a feeder appropriate for feeding thermoforming material in ribbon or plate (14) from between each female die (12) and counter-die (13),
- cutting means associated with the die and counter-die for cutting the ribbon or plate material, immediately after the closure of the die (12) and counter-die (13),
- at least one work or treatment station for articles (15) thermoformed in the or each die (12) or counter-die (13),
- extraction pick-up means (16) designed to withdraw a thermoformed article from the female die (12) and transfer it to a receiving conveying template (17) which has the same seating configuration as that of the female die (12) and is arranged to move the thermoformed articles (15) past at least one work or treatment station,
- **characterised in that** retention means are provided in said receiving conveying template to constrain articles in position against undesired movement therein, wherein said retention means are adapted to engage an article such that the article is constrained in a desired position.

2. A thermoforming apparatus as claimed in Claim 1, **characterised in that** the said pick-up extraction means comprises a plate-like head (16) arranged to be sequentially inserted between the or each female die (12) and counter-die (13) concomitantly with each opening of same

3. A thermoforming apparatus as claimed in Claim 2, **characterised in that** it comprises a carousel conveyor (2) with a plurality of bearing arms, each of which supports a respective plate-like head (17) fitted with said retention means for the retention of the thermoformed articles (15) in the correct set while they are being conveyed, stepwise and synchronously with the opening-closing rate of the dies.

4. A thermoforming apparatus as claimed in Claim 1 **characterised in that** said retention means is adapted to engage an article such that the article is resiliently constrained in a desired position.

5. A thermoforming apparatus as claimed in Claim 2, **characterised in that** it comprises a chain or chains conveyor (24) each wound by a pair of chain wheels and having a run (27) thereof extending along the respective die (12) or counter-die (13) but beyond the encumbrance thereof, a plurality of extraction plates (16) carried at predetermined intervals from each other on the said conveyor (24) and each fitted with the said retention means for retaining the thermoformed articles (15) in the proper set during their conveyance.

6. A thermoforming apparatus as claimed in Claim 1 or 2, **characterised in that** it comprises a template conveyor (24) extending through the work or treatment station or stations and moving stepwise at the opening-closure rate of the dies (12) for receiving a moulding or thermoformed articles (15) from an extraction plate (16) and conveying them in sequence to the work or treatment station or stations along the template conveyor (24).

7. A thermoforming apparatus as claimed in Claim 6, **characterised in that** the said template conveyor (24) comprises two alternately movable templates (17), one on one side of the die (12) and one on the other, so that a template (17) is moved laterally in relation to the female die (12) at a work or treatment station, while the other one is in front of it to receive an article moulding from the extraction plate (16).

8. A thermoforming apparatus as claimed in Claim 6, **characterised in that** the said template conveyor (24) is a chain or chains conveyor which comprises a pair of chain wheels (26) around which the or a respective chain (25) is wound, a plurality of plate-like templates (17) carried, spaced at a predetermined distance from each other, on the said conveyor (24) and each fitted with the said retention means for retaining the thermoformed articles (15) in the proper set during their conveyance.

9. A thermoforming apparatus as claimed in Claim 5, **characterised in that** the said template conveyor (24) comprises a train of articulated bearing slides (32) or carriages (33) for a respective template (17) moving through the work or treatment station or stations.

10. A thermoforming apparatus as claimed in any of Claims 6 to 9, **characterised in that** the said retention means on each template comprises a truncated conical collar (38) seated in each receiving hole for precise location of a respective thermoformed article (15) on the surface of each template (17) facing the extraction plate of plates (16).

11. A thermoforming apparatus as claimed in Claim 10, **characterised in that** the said collar (38) is constituted of resiliently deformable material suitable for exercising a moderate retentive pressure on the external surface of a thermoformed article (15).

12. A thermoforming apparatus as claimed in Claim 10, **characterised in that** the said collar (38) comprises a plurality of resiliently loaded ratchets (48), installed in said collar and movable towards its internal diameter for engaging with the external surface of a thermoformed article (15) in a respective receiving seat.

13. A thermoforming apparatus as claimed in Claim 10, **characterised in that** the said collar (38) comprises suction orifices which exert on the thermoformed article (15) a suction action to hold it in the proper set in its respective receiving seat and with its rim abutting against the template (17).

14. A thermoforming apparatus as claimed in any of Claims 10 to 13, **characterised in that** each template (17) at each flanged receiving set for thermoformed rimmed articles (15) has a peripheral recess formed on the surface of the template (17) facing the extraction plate or plates (16) for engaging the rim of a respective article (15) installed in it.

15. A thermoforming apparatus as claimed in any of Claims 6 to 9, **characterised in that** the said retention means for each template (17) comprises a two-diameter adaptor collar (39) installable in each receiving seat and having an internal diameter delimited by a tapered under section, and undercut intermediate section with a negative angle α, an annular shoulder downstream of the undercut section, to be able to receive from above a flanged thermoformed article (15) and snap-engage its rim at is undercut.

16. A thermoforming apparatus as claimed in any of Claims 6 to 9, **characterised in that** the said retention means for each template (17) comprises receiving holes for the thermoformed articles lower portion, but with a slightly smaller internal diameter than the external dimensions of the thermoformed articles (15) to be received close to its rim, so that the thermoformed article (15) is resiliently constrained and then steadily bedded in the respective receiving hole.

17. A thermoforming apparatus as claimed in any of Claims 6 to 9, **characterised in that** the said retention means of each template (17) comprises eccentric mechanical arrests (50), each of which is fitted at a respective receiving hole of a template (17) and is movable between an operating position in which it engages the rim of a flanged thermoformed article (15) and an inoperative releasing position.

18. A thermoforming apparatus as claimed in Claim 17, **characterised in that** the said arrests are controlled by a rack operated by a suitable motion source.

19. A thermoforming apparatus as claimed in any of Claims 6 to 9, **characterised in that** the said retention means comprises air jets (53) for sinking each of the articles (15) into the receiving holes on each template (17).

20. A thermoforming apparatus as claimed in any of Claims 6 to 9, **characterised in that** the said retention means comprises a cup-shaped receiving component (54, 61) for a thermoformed article (15) having at least one orifice in its base.

21. A thermoforming apparatus as claimed in Claim 20, **characterised in that** it comprises a push rod (56) for expelling the thermoformed article (15) from the cup-shaped component (54, 61) by acting through at least one orifice (5) in the bottom of the cup-shaped component.

22. A thermoforming apparatus as claimed in any one of Claims 6 to 9, **characterised in that** the said retention means comprises a support shoulder for shallow, thermoformed articles arranged between each receiving seat of the template (17), the said shoulder having two diameters or else including an annular projection which engages the internal diameter of the rim of the article.

23. A thermoforming apparatus as claimed in any of Claims 6 to 9, **characterised in that** the said retention means comprises a push-rod which rises from a surface of each template (17) to a respective dummy receiving seat.

24. A thermoforming apparatus as claimed in any of Claims 6 to 9, **characterised in that** the said retention means comprises at least one annular recess, in which the free rim of an upturned hollow article (15) abuts and a movable push road (56) for removal of the article (15).

## Patentansprüche

1. Warmformvorrichtung zum Warmformen von bandförmigen oder folienförmigen Materialien, bestehend aus
- einer Warmformmaschine (10), die mindestens mit einer negativen Form (12) und einer Gegenform oder positiven Form (13) ausgerüstet ist, die sich wechselweise nähern und sich für den Schließvorgang, das Warmformen und den öffnungsvorgang entfernen, einer Zuführvorrichtung, die zur Zuführung von band- oder plattenförmigem Warmformmaterial zu jeder negativen Form (12) und Gegenform (13) geeignet ist,
- einer Schneidvorrichtung, die der Form und Gegenform entsprechend zugeordnet ist, um das band- und plattenförmige Material unmittelbar nach dem Schließen der Form (12) und Gegenform (13) zu schneiden,
- mindestens eine Arbeits- oder Behandlungsstation für Artikel (15), welche in der oder jeder Form (12) oder Gegenform (13) warmgeformd sind,
- Entnahmevorrichtung (16), welche dazu dient einen warmgeformten Artikel aus der negativen Form (12) zurückzuziehen und ihn einer Aufnahme-Transportvorrichtung (17) zu übertragen, welche die gleiche Lagerungsanordnung aufweist, wie die negative Form (12) und so ausgebildet ist, dass sie die warmgeformten Artikel (15) zu mindestens einer Arbeits- oder Behandlungsstation bewegen kann, **dadurch kennzeichnet, dass** Zurückhaltevorrichtungen in der Aufnahme-Transportvorrichtung vorgesehen sind, um die Artikel darin in eine Position gegen eine unerwünschte Bewegung zu zwingen, wobei die Zurückhaltevorrichtung derartig ausgebildet ist, einen Artikel derartig zu erfassen, dass dieser in eine gewünschte Position gezwungen wird.

2. Warmformvorrichtung nach Anspruch 1, **dadurch gekenn-zeichnet, dass** die Entnahmevorrichtung einen plattenähnlichen Kopf (16) aufweist, welcher so ausgebildet ist, dass er hintereinanderfolgend zwischen der oder jeder negativen Form (12) und der Gegenform (13) eingesetzt werden kann, um gleichzeitig jede zu öffnen.

3. Warmformvorrichtung nach Anspruch 2, **dadurch gekennzeichnet, dass** diese eine Karusselltransportvorrichtung (2) mit einer Vielzahl von Tragarmen aufweist, von denen jeder einen plattenähnlichen Kopf (17) stützt, der mit der Zurückhaltevorrichtung ausgerüstet ist, um die warmgeformten Artikel (15) im korrekten Sitz zurückzuhalten, während sie schrittweise und synchron mit der öffnungs-Schließrate der Formen transportiert werden.

4. Warmformvorrichtung nach Anspruch 1, **dadurch gekennzeichnet, dass** die Zurückhaltevorrichtung derartig ausgebildet ist, dass sie einen Artikel so zurückhält, dass dieser federelastisch in die gewünschte Position gezwungen wird.

5. Warmformvorrichtung nach Anspruch 2, **dadurch gekennzeichnet, dass** diese eine Kette oder einen Kettenförderer (24) aufweist, wobei jede Kette um ein Kettenräderpaar gelegt ist und eine Bahn (27) aufweist, die sich entlang der entsprechenden Form (12) oder Gegenform (13) erstreckt, wobei jedoch jenseits von deren Beschwerung eine Vielzahl Entnahmeplatten (16) in vorbestimmten Abständen untereinander auf dem Kettenförderer (24) angebracht sind und jeder mit der genannten Zurückhaltevorrichtung ausgerüstet ist, um die warmgeformten Artikel (15) während ihrer Beförderung im geeigneten Sitz zu halten.

6. Warmformvorrichtung nach Anspruch 1 oder 2, **dadurch gekennzeichnet, dass** sie eine Fördervorrichtung (24) aufweist, die sich durch die Arbeits- oder Behandlungsstation oder -Stationen erstreckt und sich schrittweise im öffnungs-Schließtakt der Formen (12) bewegt, um einen geformten oder warmgeformten Artikel (15) von einer Ausziehplatte (16) aufzunehmen und sie nacheinander zur Arbeits- oder Behandlungsstation oder Stationen entlang der Transportvorrichtung (24) zu transportieren.

7. Warmformvorrichtung nach Anspruch 6, **dadurch gekennzeichnet, dass** die Transportvorrichtung (24) zwei hin- und herbewegliche Führungsgerüste (17) aufweist, wobei eines an einer Seite der Form (12) und eines an der anderen Seite angeordnet ist, so dass ein Führungsgerüst (17) seitlich zur negativen Form (12) an der Arbeits- oder Behandlungsstation bewegt wird, während das andere sich davor befindet, um von der Entnahmevorrichtung (16) einen geformten Artikel aufzunehmen.

8. Warmformvorrichtung nach Anspruch 6, **dadurch gekennzeichnet, dass** die Transportvorrichtung (24) aus einer Kette oder einem Kettentransporteur besteht, welcher ein Kettenräderpaar (26) aufweist, über das die Kette oder eine entsprechende Kette (25) geführt ist, wobei eine Vielzahl plattenähnlicher Traggerüste (17) von der Transportvorrichtung (24) unter einem bestimmten Abstand voneinander getragen wird, und jedes mit der genannten Zurückhaltevorrichtung ausgerüstet ist, um die warmgeformten Artikel (15) während des Transportes in der richtigen Lage zu halten.

9. Warmformvorrichtung nach Anspruch 5, **dadurch gekenn-zeichnet, dass** die Transportvorrichtung (24) eine Reihe angelenkter Traggleitstücke (32) oder Schlitten (33) für ein entsprechendes Führungsgerüst (17) aufweist, welches sich durch die Arbeits- oder Behandlungsstation oder -stationen bewegt.

10. Warmformvorrichtung nach einem der Anspruch 6 bis 9, **dadurch gekennzeichnet, dass** die Zurückhaltevorrichtung auf jedem Führungsgerüst einen abgestumpften konischen Kragen (38) aufweist, der in jeder Aufnahmeöffnung zur genauen Lokalisierung eines entsprechenden warmgeformten Artikels (15) auf der Fläche eines jeden Führungsgerüstes gegenüber der Entnahmeplatte der Platten (16) sitzt.

11. Warmformvorrichtung nach Anspruch 10, **dadurch gekennzeichnet, dass** der Kragen (38) aus federnd deformierbarem Material besteht, welches geeignet ist einen moderaten bewahrenden Druck auf die äußere Fläche eines warmgeformten Artikels (15) auszuüben.

12. Warmformvorrichtung nach Anspruch 10, **dadurch gekennzeichnet, dass** der genannte Kragen (38) eine Vielzahl federnd belasteter Sperrklinken (48) aufweist, die in dem genannten Kragen angebracht sind und in Richtung des inneren Durchmessers beweglich sind, um die äußere Fläche eines warmgeformten Artikels (15) in einem entsprechenden Aufnahmesitz zu erfassen.

13. Warmformvorrichtung nach Anspruch 10, **dadurch gekennzeichnet, dass** der Kragen (38) Saugöffnungen aufweist, die auf den warmgeformten Artikel (15) eine Saugwirkung ausübt, um ihn in der richtigen Reihe in seinem entsprechenden Aufnahmesitz zu halten, wobei er mit seinem Rand gegen das Führungsgerüst (17) stößt.

14. Warmformvorrichtung nach den Ansprüchen 10 bis 13, **dadurch gekennzeichnet, dass** jedes Führungsgerüst (17) an jedem angeflanschten Aufnahmesatz für warmgeformte mit einem Rand versehene Artikel (15) eine kreisförmige Aussparung aufweist, die auf der Oberfläche des Führungsgerüstes (17) gegenüber der Entnahmeplatte oder Entnahmeplatten (16) gebildet ist, um den installierten Rand eines entsprechenden Artikels (15) zu erfassen.

15. Warmformvorrichtung einem der Ansprüche 6 bis 9, **dadurch gekennzeichnet, dass** die Zurückhaltevorrichtung für jedes Führungsgerüst (17) einen Adapter-Kragen (39) mit Zweifach-Durchmesser aufweist, der in jeden Aufnahmesitz einsetzbar ist und der einen inneren Durchmesser aufweist, welcher durch einen konisch verlaufenden Unterschnitt und durch einen unterschneidenden Zwischenschnitt mit einem negativen Winkel alpha begrenzt ist, und einer Ringschulter unterhalb des Unterschneidungsschnittes, um in der Lage zu sein von oben einen mit einem Flansch versehenen warmgeformten Artikel (15) aufzunehmen und seinen Rand an seinem Unterschnitt zu erfassen.

16. Warmformvorrichtung nach Ansprüchen 6 bis 9, **dadurch gekennzeichnet, dass** die Zurückhaltevorrichtungen für jedes Führungsgerüst (17) Aufnahmelöcher für den unteren Teil der warmgeformten Artikel aufweist, jedoch mit einem geringfügig kleineren inneren Durchmesser als die äußeren Dimensionen der warmgeformten Artikel (15), welche dicht bis zu ihrem Rand aufgenommen werden, so dass der warmgeformte Artikel (15) federelastisch unter Druck gesetzt wird, und sodann stetig in die entsprechende Aufnahmeöffnung eingebettet wird.

17. Warmformvorrichtung nach den Ansprüchen 6 bis 9, **dadurch gekennzeichnet, dass** die Zurückhaltevorrichtungen für jedes Führungsgerüst (17) exzentrische Arretierelemente (50) aufweisen, von denen jedes an einem entsprechenden Aufnahmeloch eines Führungsgerüstes (17) angeordnet ist und zwischen einer Arbeitsposition, in der es den Rand eines mit einem Flansch versehenen warmgeformten Artikels (15) erfasst und einer inoperativen Ruhestellung beweglich ist.

18. Warmformvorrichtung nach Anspruch 17, **dadurch gekennzeichnet, dass** die Arretierelemente von einer geeigneten Bewegungsquelle mittels Zahnstangenbetätigung gesteuert werden.

19. Warmformvorrichtung nach Ansprüchen 6 bis 9, **dadurch gekennzeichnet, dass** die Zurückhaltevorrichtungen Luftstrahldüsen (53) aufweisen, um die Artikel (15) in die Aufnahmeöffnungen eines jeden Führungsgerüstes (17) zu senken.

20. Warmformvorrichtung nach Ansprüchen 6 bis 9, **dadurch gekennzeichnet, dass** die Zurückhaltevorrichtung eine kappenförmige Aufnahmekomponente (54,61) für warmgeformte Artikel (15) aufweist, der mindestens eine Öffnung in seinem Boden aufweist.

21. Warmformvorrichtung nach Anspruch 20, **dadurch gekennzeichnet, dass** sie eine Auswerferstange (56) zum Auswerfen des warmgeformten Artikels (15) aus der kappenförmigen Komponente (54,61) durch Betätigung durch mindestens eine öffnung (5) im Boden der kappenförmigen Komponente aufweist.

22. Warmformvorrichtung nach einem der Ansprüche 6 bis 9, **dadurch gekennzeichnet, dass** die Zurückhaltevorrichtung eine Stützschulter für flache warmgeformte Artikel aufweist, die zwischen jedem Aufnahmesitz des Führungsgerüstes (17) angeordnet ist, wobei die Schulter zwei Durchmesser oder einen ringförmigen Vorsprung aufweist, der den inneren Durchmesser des Randes des Artikels erfasst.

23. Warmformvorrichtung nach den Ansprüchen 6 bis 9, **dadurch gekennzeichnet, dass** die Zurückhaltevorrichtung einen Stößel aufweist, der von der Fläche des Führungsgerustes (17) in einen entsprechenden Leersitz einfährt.

24. Warmformvorrichtung nach den Ansprüchen 6 bis 9, **dadurch gekennzeichnet, dass** die Zurückhaltevorrichtung mindestens eine ringförmige Aussparung aufweist, in die der freie Rand eines nach oben gekehrten hohlförmigen Artikels (15) stößt und einen beweglichen Stößel (56) zum Entfernen des Artikels (15).

## Revendications

1. Appareil de thermoformage comprenant :
- une machine de thermoformage (10) pourvue d'au moins une matrice (12) et d'une contre-matrice ou d'un poinçon (13), pouvant être approchés et éloignés suivant un mouvement de va-et-vient pour les opérations de fermeture, de thermoformage et d'ouverture, un chargeur approprié pour amener le matériau de thermoformage en ruban ou en plaque (14) entre chaque matrice (12) et contre-matrice (13),
- des moyens de découpe associés à la matrice et à la contre-matrice pour découper le matériau en ruban ou en plaque, immédiatement après la fermeture de la matrice (12) et de la contre-matrice (13);
- au moins un poste de travail ou de traitement pour des articles (15) thermoformés dans la ou chaque matrice (12) ou contre-matrice (13),
- des moyens d'extraction et de saisie (16) conçus pour retirer un article thermoformé de la matrice (12) et le transférer vers un gabarit de réception ct de transport (17) qui a la même configuration d'appui que celle de la matrice (12) et qui est agencé de manière à déplacer les articles thermoformés (15) au-delà d'au moins un poste de travail ou de traitement,
**caractérisé en ce que** des moyens de retenue sont prévus dans ledit gabarit de réception et de transport, pour maintenir les articles en position et les empêcher d'effectuer un mouvement non souhaité, lesdits moyens de retenue étant conçus pour entrer en prise avec un article de façon à le maintenir dans une position souhaitée.

2. Appareil de thermoformage selon la revendication 1, **caractérisé en ce que** lesdits moyens d'extraction et de saisie comprennent une tête du type plaque (16) conçue pour être insérée de manière séquentielle entre les ou chacune des matrices (12) et contre-matrice (13), simultanément à chaque ouverture de celles-ci.

3. Appareil de thermoformagc selon la revendication 2, **caractérisé en ce qu'**il comprend un convoyeur à carrousel (2) ayant une pluralité de bras de support, dont chacun supporte une tête du type plaque (17) respective, pourvue desdits moyens de retenue pour retenir les articles thermoformés (15) dans la position correcte pendant leur transport, par étapes et en synchronisme avec la vitesse d'ouvcrture-fermeture des moules.

4. Appareil de thermoformage selon la revendication 1, **caractérisé en ce que** lesdits moyens de retenue sont conçus pour entrer en prise avec un article de telle sorte que cct article soit retenu de manière élastique dans une position souhaitée.

5. Appareil de thermoformage selon la revendication 2, **caractérisé en ce qu'**il comprend un convoyeur à une ou plusieurs chaînes (24), qui sont enroulées sur une paire de roues à chaînes, et dont un brin (27) s'étend le long de la matrice (12) ou contre-matrice (13) correspondante, mais au-delà de leur zone d'encombrement, plusieurs plaques d'extraction (16) étant transportées à intervalles prédéterminés les uns des autres sur ledit convoyeur (24) et étant chacune pourvues dcsdits moyens de retenue pour retenir les articles thermoformés (15) dans la position correcte pendant leur transport.

6. Appareil de thermoformage selon la revendication 1 ou la revendication 2, **caractérisé en ce qu'**il comprend un convoyeur de gabarits (24) s'étendant à travers le ou les postes de travail ou de traitement et se déplaçant par étapes à la vitesse d'ouverture-fermeture des moules (12), pour recevoir des articles moulés ou thermoformés (15) depuis une plaque d'extraction (16) et les transporter, en séquence, vers le ou les postes de travail ou de traitement, le long du convoyeur de gabarits (24).

7. Appareil de thermoformage selon la revendication 6, **caractérisé en ce que** ledit convoyeur de gabarits (24) comprend deux gabarits (17) pouvant être déplacés en alternance, un sur un côté de la matrice (12) et un sur l'autre côté, de telle sorte qu'un gabarit (17) soit déplacé dans la direction latérale par rapport à la matrice (12) au niveau d'un poste de travail ou de traitement, tandis que l'autre se trouve en face d'elle pour recevoir un article moulé en provenance de la plaque d'extraction (16).

8. Appareil de thermoformage selon la revendication 6, **caractérisé en ce que** ledit convoyeur de gabarits (24) est un convoyeur à une ou plusieurs chaînes, qui comprend une paire de roues à chaînes (26) autour desquelles la chaîne unique ou la chaîne correspondante (25) est enroulée, une pluralité de gabarits du type plaque (17) étant transportés sur ledit convoyeur (24) , à une certaine distance prédéterminée les uns des autres, et étant pourvus desdits moyens de retenue pour retenir les articles thermoformés (15) dans la position correcte pendant leur transport.

9. Appareil de thermoformage selon la revendication 5, **caractérisé en ce que** ledit convoyeur de gabarits (24) comprend un train de coulisseaux de support (32) ou de chariots (33), articulés, pour le déplacement d'un gabarit (17) respectif à travers le ou les postes de travail ou de traitement.

10. Appareil de thermoformage selon l'une quelconque des revendications 6 à 9, **caractérisé en ce que** lesdits moyens de retenue de chaque gabarit comprennent un collier tronconique (38) assis dans chaque trou de réception, pour un positionnement précis d'un article thermoformé (15) correspondant sur la surface de chaque gabarit (17) qui se trouve en regard de la ou des plaques d'extraction (16).

11. Appareil de thermoformage selon la revendication 10, **caractérisé en ce que** ledit collier (38) est constitué d'un matériau déformable de manière élastique, qui est approprié pour exercer une pression de retenue modérée sur la surface externe d'un article thermoformé (15).

12. Appareil de thermoformage selon la revendication 10, **caractérisé en ce que** ledit collier (38) comprend une pluralité de rochets (48) sollicités par une charge élastique, installés dans ledit collier et pouvant être déplacés vers le diamètre intérieur de celui-ci de manière à entrer en prise avec la surface extérieure d'un article thermoformé (15) se trouvant dans un siège de réception respectif.

13. Appareil de thermoformage selon la revendication 10, **caractérisé en ce que** ledit collier (38) comprend des orifices d'aspiration qui exercent une action d'aspiration sur l'article thermoformé (15) de manière à le maintenir dans la position correcte dans son siège de réception respectif, avec son rebord en butée contre le gabarit (17).

14. Appareil de thermoformage selon l'une quelconque des revendications 10 à 13, **caractérise en ce que** chaque gabarit (17), au niveau de chaque position de réception sur collerette pour les articles thermoformés à rebord (15), possède un évidement périphérique formé sur la surface du gabarit (17) qui se trouve en regard de la ou des plaques d'extraction (16), destiné à entrer en prise avec le rebord d'un article correspondant (15) installé sur lui.

15. Appareil de thermoformage selon l'une quelconque des revendications 6 à 9, **caractérisé en ce que** lesdits moyens de retenue de chaque gabarit (17) comprennent un collier adaptateur à deux diamètres (39), pouvant être installé dans chaque siège de réception, et ayant un diamètre intérieur délimité par une sous-section conique, et une section intermédiaire en contre-dépouille ayant un angle négatif α, un épaulement annulaire en aval de la section en contre-dépouille, pour pouvoir recevoir par le dessus un article thermoformé à collerette (15), de telle sorte que le rebord de ce dernier s'encliquette dans la partie en contre-dépouille.

16. Appareil de thermoformage selon l'une quelconque des revendications 6 à 9, **caractérisé en ce que** lesdits moyens de retenue de chaque gabarit (17) comprennent des trous de réception pour la partie inférieure des articles thermoformés, mais avec un diamètre intérieur légèrement plus petit que les dimensions extérieures des articles thermoformés (15) destinés à être reçu à proximité de son rebord, de sorte que l'article thermoformé (15) soit retenu de manière élastique et soit encastré fermement dans le trou de réception correspondant.

17. Appareil de thermoformage selon l'une quelconque des revendications 6 à 9, **caractérisé en ce que** lesdits moyens de retenue de chaque gabarit (17) comprennent des butées mécaniques excentriques (50), qui sont chacune montées au niveau d'un trou de réception respectif d'un gabarit (17) et qui peuvent être déplacées entre une position fonctionnelle dans laquelle elles entrent en prise avec le rebord d'un article thermoformé à collerette (15) et une position de dégagement non fonctionnelle.

18. Appareil de thermoformage selon la revendication 17, **caractérisé en ce que** lesdites butées sont commandées par une crémaillère actionnée par une source motrice appropriée.

19. Appareil de thermoformage selon l'une quelconque des revendications 6 à 9, **caractérisé en ce que** lesdits moyens de retenue comprennent des jets d'air (53) servant à enfoncer chacun des articles (15) dans les trous de réception sur chaque gabarit (17).

20. Appareil de thermoformage selon l'une quelconque des revendications 6 à 9, **caractérisé en ce que** lesdits moyens de retenue comprennent un composant de réception en forme de coupelle (54, 61) pour un article thermoformé (15), ayant au moins un orifice à sa base.

21. Appareil de thermoformage selon la revendication 20, **caractérisé en ce qu'**il comprend une tige de poussée (56) servant à expulser l'article thermoformé (15) du composant en forme de coupelle (54, 61) en agissant à travers au moins un orifice (5) aménagé au fond du composant en forme de coupelle.

22. Appareil de thermoformage selon l'une quelconque des revendications 6 à 9, **caractérisé en ce que** lesdits moyens de retenue comprennent un épaulement de support, pour des articles thermoformés peu profonds, disposé entre chaque siège de réception du gabarit (17), ledit épaulement ayant deux diamètres ou autre et comprenant une saillie annulaire qui entre en prise avec le diamètre intérieur du rebord de l'article.

23. Appareil de thermoformage selon l'une quelconque des revendications 6 à 9, **caractérisé en ce que** lesdits moyens de retenue comprennent une tige de poussée qui s'élève depuis une surface de chaque gabarit (17) jusqu'à un siège de réception de modèle respectif.

24. Appareil de thermoformage selon l'une quelconque des revendications 6 à 9, **caractérisé en ce que** lesdits moyens de retenue comprennent au moins un évidement annulaire, dans lequel vient en butée le rebord libre d'un article creux tourné vers le haut (15), et une tige de poussée mobile (56) servant au retrait de l'article (15).
